# EUROPEAN PATENT APPLICATION

(11) **EP 4 451 603 A1**
(43) Date of publication of application: **23.10.2024**
(21) Application number: 23305586.2
(22) Date of filing: 18.04.2023
(51) Int. Cl.: H04L 9/00, H04L 9/32, H04W 12/03, H04W 12/30, H04W 12/40, H04L 9/40, H04W 4/50

(54) **INFRASTRUCTURE FOR REMOTE PROFILE PROVISIONING**

(71) Applicant: THALES DIS FRANCE SAS, 92190 Meudon (FR)
(72) Inventor: ANSLOT, Michel, 06250 Mougins (FR); DEMARTY, Joel, 35520 Montreuil-le-Gast (FR)
(74) Representative: Thomas, Christine Marie Catherine

(57) **Abstract**

The present invention relates to an infrastructure for remote profile provisioning (RSP) comprising secure elements to be provisioned, a subscription manager adapted to prepare data to be routed to secure elements to be provisioned and a ledger storing keys. Secure elements have at least an identifier, a pre-stored key corresponding to one stored in the ledger and pre-stored generic profile elements as defined in an RSP template, at least one profile element necessitating credentials for the secure element to have an operational profile. Said subscription manager is adapted to receive a request for profile provisioning comprising a secure element identifier, to retrieve a key associated to the received identifier from the ledger, to retrieve credentials to be pushed in the secure element having the received identifier, to encode the retrieved credentials using the retrieved key, to route the encoded credentials to the secure element for the secure element to decode the credentials using the pre-stored key and to complete the pre-stored profile element of the template to have an operational profile.

## Description

### FIELD OF THE INVENTION

The present invention relates to an infrastructure for remote profile provisioning (RSP) comprising secure elements to be provisioned and a subscription manager adapted to prepare data to be routed to secure elements to be provisioned.

The invention also pertains to a method for remote profile provisioning.

### BACKGROUND OF THE INVENTION

A remote SIM provisioning (RSP) process generally presents an incompressible delay to write the profile in the eSIM using in-factory APDU commands. This represents a minimum of 14 seconds. It could be longer for large profiles. This duration during profile provisioning is a problem as each second lost is money lost.

Besides, the RSP process is also draining battery in case of in field provisioning. The profile download over the air (OTA) in constraint devices is identified as an issue. The longer the process lasts, the more important is this issue.

Further alternative and advantageous solutions would, accordingly, be desirable in the art, mainly to speed up the RSP.

### SUMMARY OF THE INVENTION

The present invention aims at lowering the duration and the power consumption of the remote provisioning.

The present invention is defined, in its broadest sense, as an infrastructure for remote profile provisioning (RSP) comprising secure elements to be provisioned, a subscription manager adapted to prepare data to be routed to secure elements to be provisioned, said infrastructure further comprising a ledger storing keys and being further such that:
- said secure elements have at least an identifier, a pre-stored key corresponding to one stored in the ledger and pre-stored generic profile elements as defined in an RSP template, at least one profile element necessitating credentials for the secure element to have an operational profile,
- said subscription manager is adapted to receive a request for profile provisioning comprising a secure element identifier, to retrieve a key associated to the received identifier from the ledger, to retrieve credentials to be pushed in the secure element having the received identifier, to encode the retrieved credentials using the retrieved key, to route the encoded credentials to the secure element for the secure element to decode the credentials using the pre-stored key and to complete the pre-stored profile element of the template to have an operational profile.

The invention enables a fast remote SIM provisioning as only a small amount of data needs to be provisioned. Therefore, the invention concerns a model to perform faster on demand connectivity activation, for factory provisioning, and less energy-intensive, for in-field provisioning and re-provisioning.

The solution is based on the current GSMA specifications. Indeed, according to the invention, the full profile package as currently downloaded is replaced by a few credentials download. The evolution of the subscription manager remains pretty light and limited to integration with the ledger.

This innovation could be seen as an extension of WG7 for SGP31 and for new GSMA eSIM specification SGP41 related to In-Factory Profile Provisioning.

The innovation provides solution to an industrial problem, reducing the duration to download profiles in factory and also reducing the battery draining in the field during profile download.

Moreover the invention, thanks to the ledger, works with all EUMs manufacturers. It only requires compliant eUICC+ produced by EUM and compliant subscription manager SMDP++.

By observation of messages between eUICC+ and SMDP++, it is observed that the bounded profile size, excluding the protocol overhead, is less 1000 bytes. The proposed solution is thus superior compared to the template mechanism defined in the TCA "eUICC Profile Package: Interoperable Format Technical Specification". There is no issue for the proposed solution to also work also with iSIM evolution.

According to an advantageous feature, the keys pre-stored in the secure elements are keys diversified using the secure element identifier from a master key stored in the ledger.

This feature enables the ledger to store only a master key and to simply use a secure element identifier (or a secure element dependent information) to retrieve the key to be used for the encryption of the credentials to be sent to the secure element.

Thus, the ledger is advantageously adapted to calculate diversified keys from the stored master key by using the received secure element identifier.

According to a first embodiment of the invention, the encoding is a logical operation applied on the credentials and the stored key, which is a shared key.

This embodiment uses a secret key shared by the ledger and the secure element.

According to another embodiment of the invention, the keys pre-stored in secure elements being private keys of a pair of asymmetric keys, the keys in the ledger are corresponding public keys, associated to the secure element identifier and the encoding of the credentials is an encryption with the public key.

With such a use of asymmetric cryptographic, keys stored in the ledger are public keys. With the use of a public ledger, the eSIM only needs to transmit a short identifier for the credentials. There is no need to send the full public key which can be quite long. For instance, in case of Post Quantum Cryptography PKI, a public key corresponding today to 2048 bit will be 19000 bit for the same level of security. Thus the use of a public ledger further optimizes the performance of the invention.

Advantageously, the credentials are chosen among IMSI, Ki, OPC, OTA keys, ICCID, RiCi.

Such credentials enable to activate an operational profile stored as a template. It enables to further optimize the use of a template.

Advantageously, the ledger is a blockchain based ledger.

With a public or permissioned Distributed Ledger Technology (DLT), there is no need to transmit a lot of information to the subscription manager. Only the identifier must be transmitted. The remaining information can be retrieved from the ledger, which has no bandwidth or power consumption constraints.

According to an advantageous embodiment of the invention, the secure elements supporting several templates of which generic profile elements have been downloaded in the secure element, the credentials include a template identifier.

It enables the secure elements to support multiple templates. For instance a basic template and a more complex template for specific MNOs. The generic profile elements of such templates can be loaded in the eUICC during its manufacturing. The template identifier as part of the cyphered credentials enables to load the credentials in the right template in the eUICC.

The invention also relates to a method to provision profiles in secure elements to be provisioned by a subscription manager adapted to prepare data to be routed to secure elements to be provisioned, said method being such that, said secure elements having at least an identifier, a pre-stored key and pre-stored generic profile elements as defined in an RSP template, at least one profile element necessitating credentials for the secure element to have an operational profile, and said subscription manager having access to a ledger storing keys corresponding to the keys as pre-stored in secure elements, the method comprises the steps of, for the subscription manager:
- receiving a request for profile provisioning comprising a secure element identifier,
- retrieving a key associated to the received identifier from the ledger,
- retrieving credentials to be pushed in the secure element having the received identifier,
- encoding the retrieved credentials using the retrieved key,
- routing the encoded credentials to the secure element for the secure element to decode the credentials using the pre-stored key and to complete the pre-stored profile element of the template to have an operational profile.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a infrastructure of the invention is implemented;
- Figure 2 shows a remote SIM provisioning method according to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

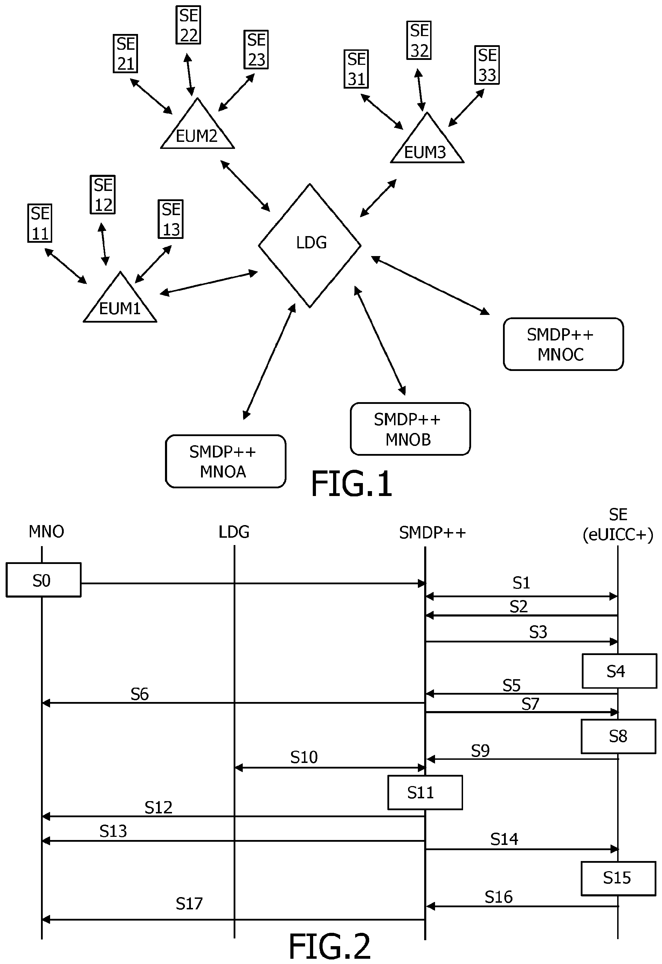

Figure 1 schematically shows an infrastructure for remote profile provisioning (RSP) of the invention. This infrastructure comprises a least a subscription manager SMDP++ and several secure elements SE to be provisioned with a profile. The subscription manager SMDP++ is adapted to prepare data to be routed to secure elements to be provisioned. Said infrastructure further comprises a ledger LDG storing keys. In practice, said ledger LDG is connected to at least one subscription manager SMDP++ and to at least a eUICC Manufacturer UEM which manufactures or manages secure elements SE.

In the exemplary implementation shown on figure 1, the ledger LDG is connected to several subscription managers SMDP++, each belonging to different MNO A, B and C. The ledger LDG is also connected to several eUICC manufacturer EUM1, EUM2 and EUM3. Typically each of them are manufacturing user equipments having embedded secure elements SE11, SE12, SE13, SE21, SE22, SE23, SE31, SE32, SE33 to be provisioned according to the invention. The secure elements SE are thus typically embedded secure element eUICC.

In the invention, the secure elements SE have at least an identifier eID and at least one profile template loaded in factory. During the secure element personalization, a key dedicated to the implementation of the invention is also pre-stored. The secure elements SE are thus specific for the implementation of the invention. Typically, in case asymmetric cryptography is used, a key pair enables the subscription manager and the secure element to exchange data including the specific credentials of the invention. The private key F_RSPpriv is prestored in the secure element while the corresponding public key F_RSPpub is stored in the ledger. According to the invention, the pre-stored key corresponds to one key stored in the ledger LDG or being retrievable by the ledger LDG. More precisely, the profile template pre-stored in the secure element of the invention includes pre-stored generic profile elements as defined in an RSP template. For the invention, at least one profile element necessitates credentials for the secure element to have an operational profile.

A distributed ledger technology can be used to implement the ledger LDG of the invention. It can also be a new eSIM service managed by GSMA. For example, a service similar to Discovery Service managed between EUMs and SMDP++s actors.

For the invention, the manufacturer EUM thus writes a private key F-RSP in eUICC+ and publishes a corresponding public key F-RSP to the ledger LDG during manufacturing. The ledger LDG is thus filed by EUMs with a write access during eUICC manufacturing, associating an identifier eID with a key. This allows compatibility between EUM. Ledger access is limited to EUM, write only, and SMDP++, read only.

Figure 2 shows schematically a provisioning method of the invention. Said provisioning method is based on the different interfaces as defined in GSMA specifications, i.e. RSP Architecture, Version 2.2, 01 September 2017. It is described in these specifications that, in particular, the ES2+ interface is used by the Operator to order Profiles for specific eUICCs as well as other administrative functions. The ES9+ interface is besides used to provide a secure transport for the delivery of a Bound Profile Package between the SMDP++ and the Local Profile Download LPD.

In a preliminary step S0, at the mobile network operator MNO controlling the SMDP++ of the invention, credentials are downloaded in the SMDP++. This consists, for the MNO, in allocating keys to subscriptions. The SMDP++ is then modified to manage encrypted credentials to download instead of a full profile.

Currently in SMDP+, the keys are loaded in the profile, which is then downloaded to the device. In a subscription manager SMDP++ of the invention, the template credentials are just sent all encrypted. The eSIM receives the credentials and decrypt them. It then uses the template as previously internally stored and updates keys using the received and decrypted credentials. The result is the same as with current SMDP+ but the provisioning is more efficient in terms of quantity of data to be transferred. There is indeed no need to send the whole template. It enables to substantially gain time. It can reach to more than 10 seconds savings. Also, as the secure element has the public key upstream instead of receiving it when establishing the connection with current subscription manager.

More precisely, the invention enables, instead to load a complete profile, to load only credentials in an "empty" profile template already available in the secure element eUICC+. Those credentials are mainly IMSI, Ki, OPC, OTA keys, ICCID, RiCi. Around one hundred of bytes is to be downloaded instead of X Kbytes as currently performed.

Advantageously, the credentials as pushed in the SMDP++ are encrypted with an MNO key that is shared with the SMDP++. Thus initialization is performed at the SMDP++ with the reception of encrypted credentials IMSI, Ki,OPC, ICCID, OTA keys RiCi.

The invention is based on the process specified in GSMA for CE (consumer eSIM) RSP official documents SGP21 and SGP 22 and IoT RSP in official documents SGP31 and SGP32.

When the provisioning process starts, steps S1, S2, S3, S4, S5 known in the prior art are performed. The eUICC+ is connected via the local/IoT profile assistant LPA/IPA, to the SMDP++.

Step S1 consists in the establishment of an HTTPS connection between the subscription manager SMDP++ and the secure element SE. Step S2 consists in an initiation of an authentication according to the interface ES9+ defined in GSMA. In a step S3, as defined in the GSMA official documents, the subscription manager SMDP++ sends a transaction identifier Transactionld, a signature smdpSigned1 and a certificate Cert.DPauth to the secure element SE.

The secure element SE thus authenticate the subscription manager server SMDP++ in a step S4 and returns an confirmation of the authentication of the client authenticateClient(... ) as defined in interface ES9+ in a step S5.

It triggers a step S6, known in the interface ES2+, of, for the subscription manager SMDP++, sending HandleDownloadProgressInfo with a notification PointId =1 and eligibility and retry limit check.

In a step S7, the SMDP++ sends the identifier transactionld with metadata profileMetadata relative to a profile to be provisioned, a signature smdpSigned2 and a certificate cert.DPpb as described in official GSMA documents.

The secure element SE then generates keys in a step S8. This keys are bounded package transport keys as also described in the GSMA official documents.

In a step S9, the secure element SE sends a request getboundProfilePackage to the SMDP++ as defined in the interface ES9+.

After reception of the request GetBoundProfilePackage, according to the invention, the SMDP++ identifies if the eUICC SE is eligible for Fast RSP of the invention, typically using the SE identifier eID. An eligible secure element SE has previously stored template(s) and a pre-stored key.

In case of eligibility, in a step S10 according to the invention, the SMDP++ then sends a request to the ledger LDG comprising the identifier eID and gets the corresponding key F-RSP key. Thus the SMDP++ reads from the ledger LDG the encryption key F-RSP to use for this secure element SE. Advantageously the subscription manager SMDP++ reads a eID F-RSP public key used to encrypt the MNO credentials to download to the eUICC SE.

According to the invention, the subscription manager SMDP++ besides decrypts the credentials as received at the step of initialization S0 using an MNO key received by the subscription manager at the step of initialization. Then, in a step S11, the subscription manager SMDP++ if the invention encrypts the decrypted credentials with the eID F-RSP key as retrieved from the ledger LDG. Thus, instead to send a full profile package, the SMDP++ manages credentials from the MNOs, i.e. deciphers with MNO key and encrypts the credentials with eID F-RSP key.

Advantageously, the eID key is a factory-diversified key corresponding to the one pre-stored in the eUICC.

Then two steps S12 and S13 of the interface ES2+ are handled as defined in GSMA official documents. A notification HandleDownloadProgressInfo with a notification Pointld=2 and a confirmation code are sent and another HandleDownloadProgressInfo with a notification Pointld=3 and BPP download. Then, the SMDP++ sends the requested package transactionld BoundProfilePackage (BPP) in a step S14. Here the subscription manager SMDP++ of the invention thus sends encrypted credentials to eUICC as a bytes list instead of a full profile package.

It enables the secure element SE of the invention to identify credential package. It then decrypts the credentials using the pre-stored key in the profile template in a step S15. The secure element SE of the invention writes credentials once deciphered using the pre-stored unique key F-RSP key. After writing of the deciphered credentials, the profile is thus installed and interfaces ES9+ and ES2+ can be terminated in steps S16 and S17. In these last steps, a notification HandleNotification is sent to the SMDP++ according to the interface ES9+ and a notification HandleDownloadProgressInfo with a notification Pointld=4 and BPP installation.

At the end of the method, the eUICC+ has thus identified fast RSP mode, decoded the received credentials with eUICC F-RSP key, written credentials in the template and updated template profile to operational profile. All other RSP SMDP++ actions remain the same.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Infrastructure for remote profile provisioning (RSP) comprising secure elements to be provisioned, a subscription manager adapted to prepare data to be routed to secure elements to be provisioned,
said infrastructure further comprising a ledger storing keys and being further such that:
- said secure elements have at least an identifier, a pre-stored key corresponding to one stored in the ledger and pre-stored generic profile elements as defined in an RSP template, at least one profile element necessitating credentials for the secure element to have an operational profile,
- said subscription manager is adapted to receive a request for profile provisioning comprising a secure element identifier, to retrieve a key associated to the received identifier from the ledger, to retrieve credentials to be pushed in the secure element having the received identifier, to encode the retrieved credentials using the retrieved key, to route the encoded credentials to the secure element for the secure element to decode the credentials using the pre-stored key and to complete the pre-stored profile element of the template to have an operational profile.

2. Infrastructure according to claim 1, wherein the keys pre-stored in the secure elements are keys diversified using the secure element identifier from a master key stored in the ledger.

3. Infrastructure according to claim 2, wherein the ledger is adapted to calculate diversified keys from the stored master key by using the received secure element identifier.

4. Infrastructure according to at least one of preceding claims, wherein the encoding is a logical operation applied on the credentials and the stored key, which is a shared key.

5. Infrastructure according to at least one of preceding claims, wherein the keys pre-stored in secure elements being private keys of a pair of assymetric keys, the keys in the ledger are corresponding public keys, associated to the secure element identifier and the encoding of the credentials is an encryption with the public key.

6. Infrastructure according to at least one of preceding claims, wherein the credentials are chosen among IMSI, Ki, OPC, OTA keys, ICCID, RiCi.

7. Infrastructure according to at least one of the preceding claims, wherein the ledger is a blockchain based ledger.

8. Infrastructure according to one of preceding claims, wherein the secure elements supporting several templates of which generic profile elements have been downloaded, the credentials include a template identifier.

9. Method to provision profiles in secure elements to be provisioned by a subscription manager adapted to prepare data to be routed to secure elements to be provisioned, said method being such that, said secure elements having at least an identifier, a pre-stored key and pre-stored generic profile elements as defined in an RSP template, at least one profile element necessitating credentials for the secure element to have an operational profile, and said subscription manager having access to a ledger storing keys corresponding to the keys as pre-stored in secure elements, the method comprises the steps of, for the subscription manager:
- receiving a request for profile provisioning comprising a secure element identifier,
- retrieving a key associated to the received identifier from the ledger,
- retrieving credentials to be pushed in the secure element having the received identifier,
- encoding the retrieved credentials using the retrieved key,
- routing the encoded credentials to the secure element for the secure element to decode the credentials using the pre-stored key and to complete the pre-stored profile element of the template to have an operational profile.
